# EUROPEAN PATENT SPECIFICATION

(11) **EP 3 608 633 B1**
(45) Date of publication and mention of the grant of the patent: **11.05.2022**
(21) Application number: 19190354.1
(22) Date of filing: 06.08.2019
(51) Int. Cl.: G01C 21/20, G01C 21/34, G08G 5/00, B64C 39/02, G05D 1/00, G08G 1/083, H04B 10/112, H04B 10/116, H04B 10/80, B64F 1/28

(54) **SYSTEM AND METHOD FOR GUIDING A VEHICLE ALONG A TRAVEL PATH**
SYSTEM UND VERFAHREN ZUM FÜHREN EINES FAHRZEUGS ENTLANG EINES FAHRWEGES
SYSTÈME ET PROCÉDÉ DE GUIDAGE D'UN VÉHICULE LE LONG D'UN PARCOURS

(30) Priority: 07.08.2018 US 201816057455
(43) Date of publication of application: 12.02.2020
(73) Proprietor: General Electric Company, Schenectady, NY 12345 (US)
(72) Inventor: LOPEZ, James Gerard, Niskayuna, NY 12309 (US); BORGYOS, Szabolcs Andras, Niskayuna, NY 12309 (US)
(74) Representative: Openshaw & Co.

(56) References cited:
- US-A1- 2013 107 219
- US-A1- 2015 336 669
- US-A1- 2016 257 423
- US-B1- 9 387 928

## Description

### PRIORITY

This application is a Continuation In Part of and claims the benefit of U.S. Application No. 15/087,015 filed March 31, 2016, titled "System and Method for Positioning an Unmanned Aerial Vehicle."

### BACKGROUND

The field of the disclosure relates generally to vehicle guidance systems and, more particularly, to a system and method for generating a multi-dimensional vehicle travel path and guiding a vehicle along the vehicle travel path using at least one vehicle re-energization location.

Vehicles may include manned, unmanned, autonomous, and non-autonomous vehicles. The vehicles may be aerial-based, water-based, and/or land-based vehicles, for example. Many vehicles include onboard navigational systems. These systems may use inertial navigation sensors such as accelerometers and gyroscopes for flight positioning and maneuvering and satellite-based navigation for general positioning and wayfinding. Satellite-based navigation systems compensate for location error caused by accelerometer and gyroscope bias, drift, and other errors. However, manmade structures and natural features may interfere with satellite-based navigation systems, thereby interfering with accurate positioning and control of the vehicle as it travels through a given medium. Additionally, there is not established infrastructure and systems to manage operations of low-altitude autonomous vehicle traffic, for example, and to schedule and queue re-energization of autonomous and non-autonomous vehicles throughout their travel paths in low altitude (below 4000 feet above ground level) airspace.

US 2015/0336669 Al discloses a method of unmanned aerial vehicle network-based recharging. US 9,387,928 B1 discloses systems and methods for providing a series of multiuse UAV docking stations. US 2016/0257423 Al discloses an unmanned aerial vehicle delivery system utilizing an unmanned aerial vehicle (UAV) to deliver packages between an initiation point and multiple delivery points at a raised elevation. US 2013/0107219 Al discloses a relative navigation system that projects a grid into space from a grid generator. An object, such as an unmanned aerial vehicle, may use the projected grid to aid in the landing of the object. Also disclosed are methods of adjusting the projected grid including stabilizing the projected grid and orienting the grid generator relative to the earth.

### BRIEF DESCRIPTION

The invention is defined by the appended claims. In the following, apparatus and/or methods referred to as embodiments that nevertheless do not fall within the scope of the claims should be understood as examples useful for understanding the invention.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of an exemplary vehicle guidance system including an aerial-based vehicle, a vehicle trajectory management system, and a position reference system;
FIG. 2 is a schematic view of an exemplary vehicle travel path generated by the vehicle trajectory management system including a plurality of waypoints and vehicle re-energization locations;
FIG. 3 is a graphical view of an exemplary transmission signal encoded with location information and transmitted by the position reference system shown in FIG. 1;
FIG. 4 is a schematic view of exemplary transmission signals transmitted and projected into space by the position reference system shown in FIG. 1;
FIG. 5 is a block diagram illustrating the vehicle and the position reference system of the vehicle guidance system shown in FIG. 1;
FIG. 6 is a block diagram illustrating a re-energization location for use with the vehicle guidance system shown in FIG. 1;
FIG. 7 is a schematic view of the position reference system and the vehicle shown in FIG. 1 with the vehicle positioned for line of sight communication with the re-energization location shown in FIG. 6;
FIG. 8 is a schematic view of the vehicle shown in FIG. 1 positioned for wireless re-energization;
FIG. 9 is a flow chart of an exemplary method of positioning the vehicle shown in FIG. 1;
FIG. 10 is a flow chart of an exemplary method of changing the location of the vehicle shown in FIG. 1; and
FIG. 11 is a flowchart of an exemplary method for guiding the vehicle shown in FIG. 1 along a vehicle travel path.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer" and related terms, e.g., "processing device", "computing device", and "controller" are not limited to just those integrated circuits referred to in the art as a computer, but broadly refers to a microcontroller, a microcomputer, a programmable logic controller (PLC), an application specific integrated circuit, and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Further, as used herein, the terms "software" and "firmware" are interchangeable, and include any computer program stored in memory for execution by personal computers, workstations, clients and servers.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device and a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As used herein, the term "real-time commands" is intended to be representative of instructions formatted to control a control system and related components that are received and then executed in order. These activities occur substantially instantaneously. Real-time commands are not stored for execution at a substantially later time or execution in an order other than the order in which the commands are received.

The vehicle guidance systems and methods described herein provide for enhanced vehicle travel path planning, vehicle travel scheduling, vehicle positioning, vehicle guidance, vehicle re-energization scheduling and reservation, and vehicle re-energization along a vehicle travel path for a plurality of vehicles. Furthermore, the systems and methods described herein allow for enhanced in-transit real-time vehicle travel path updates including being directed to vehicle re-energization locations based on changing energization states of the vehicles and re-energization priorities of the vehicles in transit along similar vehicle travel paths. Additionally, the system and methods described herein facilitate rapid and efficient re-energization of the vehicle by maintaining the vehicle at a stationary location and directing the vehicle to a specific re-energization location more precisely and efficiently. By accurately establishing a position of a vehicle relative to a fixed or moving position reference system and scheduling a re-energization location(s) in real-time in response to current energization status and the vehicle travel path of the vehicle, the vehicle is capable of enhanced operational capability, availability, and more efficient operation.

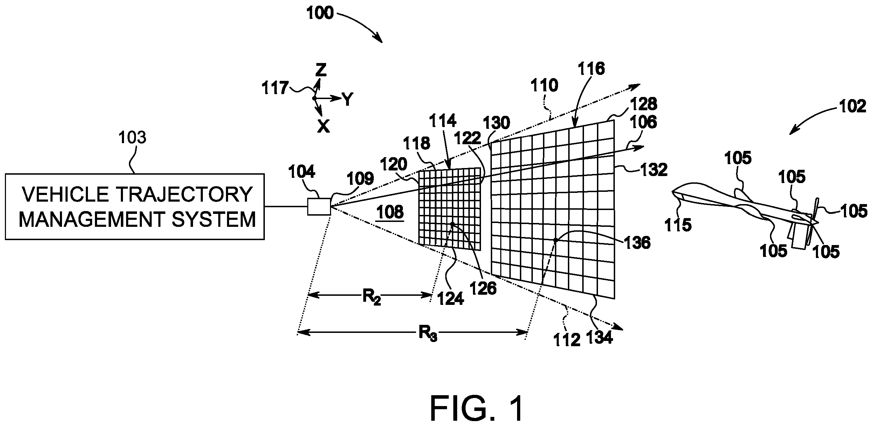

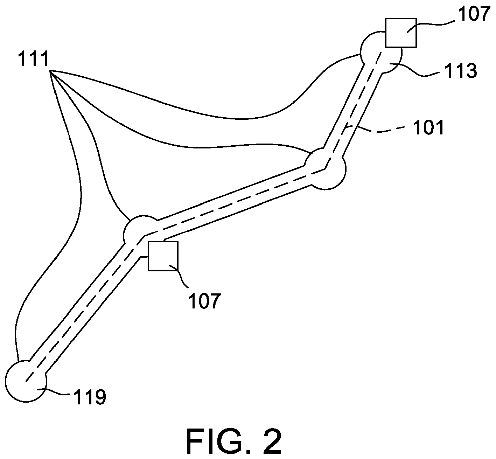

FIG. 1 is a schematic view of an exemplary vehicle guidance system 100 including a vehicle 102, a vehicle trajectory management system 103, and a position reference system 104. FIG. 2 is a schematic view of a vehicle travel path 101 generated by vehicle trajectory management system 103 including a plurality of waypoints 111 and two vehicle re-energization locations 107. In the exemplary embodiment, vehicle 102 is an unmanned aerial vehicle (UAV) configured to operate aerially and is capable of flight without an onboard pilot (autonomously or substantially autonomously). For example, and without limitation, vehicle 102 is a fixed wing aircraft, a tilt-rotor aircraft, a helicopter, a multirotor drone aircraft such as a quadcopter, a blimp, a dirigible, or other aircraft. In alternative embodiments, vehicle guidance system 100 includes a land-based vehicle (not shown) and/or a water-based vehicle (not shown). For example, and without limitation, the land-based vehicle is a wheeled vehicle such as car or truck type vehicle, a tracked vehicle, or other ground vehicle of any size. In further alternative embodiments, vehicle guidance system 100 includes a water-based vehicle. For example, and without limitation, the water-based vehicle is a surface vehicle such as a boat or a submersible vehicle such as a submarine. In yet further alternative embodiments, vehicle 102 may be operated by an operator onboard vehicle 102 or positioned remotely to vehicle 102.

Vehicle 102 includes at least one control device 105. Control device 105 produces a controlled force and maintains or changes a position, orientation, or location of vehicle 102. Control device 105 is a thrust device or a control surface. A thrust device is a device that provides propulsion or thrust to vehicle 102. For example, and without limitation, a thrust device is a motor driven propeller, jet engine, or other source of propulsion. A control surface is a controllable surface or other device that provides a force due to deflection of an air stream passing over the control surface. For example, and without limitation, a control surface is an elevator, rudder, aileron, spoiler, flap, slat, air brake, or trim device. Control device 105 may also be a mechanism configured to change a pitch angle of a propeller or rotor blade or a mechanism configured to change a tilt angle of a rotor blade.

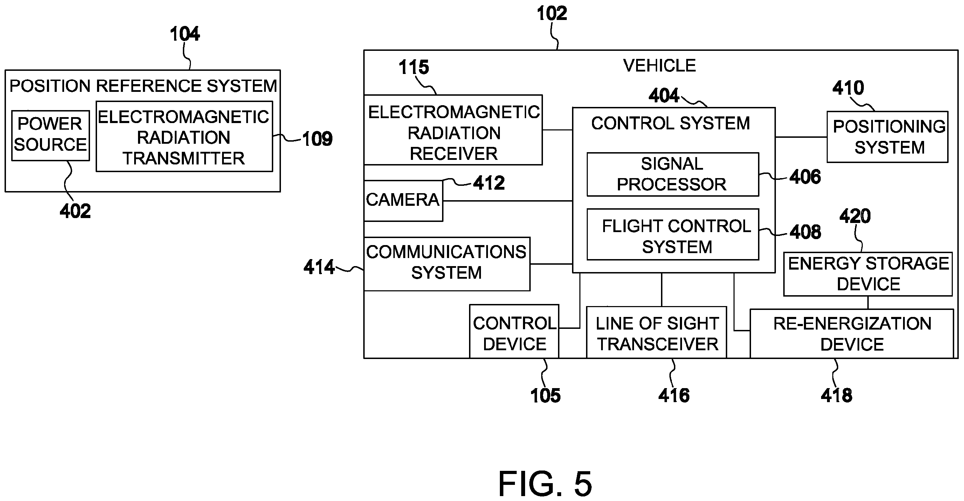

Vehicle 102 is controlled by systems described herein including, without limitation, an onboard control system (shown in FIG. 5), a re-energization location (not shown in FIG. 1), at least one control device 105, vehicle trajectory management system 103, and a position reference system 104. Vehicle 102 may be controlled by, for example, and without limitation, real-time commands received by vehicle 102 from vehicle re-energization location 107, a set of preprogrammed instructions received by vehicle 102 from the re-energization location, a set of instructions and/or programming stored in the onboard control system, or a combination of these control schemes.

Real-time commands control at least one control device 105. For example, and without limitation, real-time commands include instructions that, when executed by the onboard control system, cause a throttle adjustment, flap adjustment, aileron adjustment, rudder adjustment, or other control surface or thrust device adjustment. In some embodiments, real-time commands further control additional components of vehicle 102. For example, and without limitation, real-time commands include instruction that when executed by the onboard control system cause a wireless charging receiver (shown in FIG. 5) to change a power source (shown in FIG. 5).

A set of predetermined instructions received from position reference system 104, vehicle trajectory management system 103, and/or vehicle re-energization location 107 are formatted to control vehicle 102 when executed by the onboard control system. For example, and without limitation, a set of instructions is a sequence of two or more instructions formatted to control at least one control device 105, two or more instructions formatted to control at least one control device 105 to reduce movement of vehicle 102 away from a predetermined point, a sequence of two or more instructions formatted to control at least one control device 105 to move vehicle 102 to a predetermined position, a sequence of two or more instructions formatted to control at least one control device 105 to move vehicle 102 to a predetermined location, or a sequence of two or more instructions formatted to control at least one control device 105 to execute a maneuver to change the position of vehicle 102. A maneuver is for example, and without limitation, a roll, a yaw, a climb, a dive, a slip turn, a banked turn, a standard rate turn, or other maneuver. In some embodiments, a set of instructions received from the re-energization location further controls additional components of vehicle 102. For example, and without limitation, the set of instructions when executed by the onboard control system cause a wireless charging receiver to change a power source.

A set of instructions and/or programming stored in the onboard control system and executed by the onboard control system may control vehicle 102. The set of instructions or programming are stored in memory of vehicle 102 and are provided to the memory. For example, and without limitation, the set of instructions or programming is transmitted, through a wireless or wired connection to the onboard control system, and stored in memory. The set of instructions or programming may be general or task specific. General instructions or programming is, for example, and without limitation, formatted to control at least one control device 105 to perform a specific maneuver, control at least one control device 105 to perform a specific set of maneuvers, control at least one control device 105 to operate vehicle 102 in a specific mode such as a station-keeping mode to reduce movement of vehicle 102 relative to a specific position, or a wireless charging receiver to change a power source.

In some embodiments, vehicle 102 is controlled by a combination of real-time commands, a set of instructions received from the vehicle re-energization location 107, and a set of instructions and/or programming stored in the onboard control system. For example, and without limitation, real-time commands are used to initiate a specific task such as positioning vehicle 102 for re-energization at a vehicle re-energization location 107. A set of instructions received by vehicle 102 from the re-energization location causes vehicle 102 to travel to a series of waypoints 111 and ultimately to destination location 119. A set of instructions and/or programming stored in the onboard control system are executed to perform maneuvers using control devices 105 to cause vehicle 102 to travel to each waypoint 111 and vehicle re-energization location 107.

Vehicle guidance system 100 includes vehicle trajectory management system 103 configured to generate vehicle travel paths 101. Each vehicle travel path 101 is generated for a specific vehicle 102 and a specific trip includes a plurality of waypoints 111. Vehicle guidance system 100 plots each vehicle travel path 101 in four dimensions including, with reference to coordinate system 117, a Z-direction, a X-direction, a Y-direction, and a time dimension such that a calculated location of each vehicle 102 may be determined at any given time during each vehicle travel path 101. Plurality of waypoints 111 includes a departure location 113, a destination location 119, and at least one vehicle re-energization location 107 positioned at a waypoint 111 between departure location 113 and destination location 119 along each vehicle travel path 101. In the example embodiment, vehicle trajectory management system 103 is configured to determine at least one vehicle re-energization location 107 from a plurality of vehicle re-energization locations 107 based on at least one of a vehicle travel path 101 length, an operational availability of at least one vehicle re-energization location 107 of plurality of vehicle re-energization locations 107, weather conditions along vehicle travel path 101, a first amount of energy stored by energy storage device 420, and a priority of vehicle 102 among a plurality of vehicles 102 having a plurality of priorities, for example.

In the example embodiment, the operational availability of each vehicle re-energization location 107 may be determined from a plurality of factors including an amount of stored energy available at each vehicle re-energization location 107, an ability of each vehicle re-energization location 107 to re-energize more one or more than one vehicle 102, and vehicles 102 already scheduled to utilize each re-energization location 107 by vehicle trajectory management system 103, for example. The priority of a vehicle 102 may be determined by a plurality of factors including energization level of vehicle 102, vehicle travel path 101 length, weather conditions in the area of vehicle 102, criticality of cargo aboard vehicle 102 (for instance, organ transplants), for example. Based on the above mentioned factors, a specific re-energization location 107, and/or multiple re-energization locations 107, are scheduled and/or reserved for each vehicle 102 along each vehicle travel path 101.

Vehicle guidance system 100 includes a position reference system 104 in communication with vehicle trajectory management system 103 to improve the positioning of vehicle 102. For example, and without limitation, satellite-based navigation systems and other systems may be less precise than position reference system 104 and/or be negatively impacted by interference due structures or natural features. Position reference system 104 transmits a transmission signal 106. Transmission signal 106 is encoded with location information. The location information is associated with and relative to position reference system 104. Position reference system 104 transmits transmission signal 106, within a field of transmission 108, using an electromagnetic radiation transmitter 109. Electromagnetic radiation transmitter 109 is configured to transmit transmission signal 106 in a pattern. The pattern produces, within an upper bound 110 and a lower bound 112, a first grid 114 and a second grid 116. For example, electromagnetic radiation transmitter 109 scans a beam emitted by electromagnetic radiation transmitter 109 in a raster pattern, and transmission signal 106 is encoded onto the beam using modulation when the beam is scanning across a specific point within the raster pattern. This creates the points at the intersecting lines of each of first grid 114 and second grid 116. Location data information included in transmission signal 106 corresponds to a location of the beam transmitted by electromagnetic radiation transmitter 109 within the raster pattern.

First grid 114 and second grid 116 result from transmission of transmission signal 106 in the pattern which projects intersecting lines substantially in the Y-direction of a coordinate system 117. The projection of intersecting lines, viewed in the Z-X plane at some distance R₂ away from the position reference system 104, appears as first grid 114. The same projection of intersecting lines, viewed at a distance R₃ which is greater than the first distance R₂ in the Z-X plane, appears as second grid 116, which appears relatively larger than first grid 114.

First grid 114 at distance R₂ away from the position reference system 104 is spatially bound in the horizontal direction by a first vertical line 120 and a last vertical line 122. A plurality of vertical lines spatially and temporally generated between first vertical line 120 and last vertical line 122 results from the timing of transmission of transmission signal 106 by position reference system 104 as electromagnetic radiation transmitter 109 moves within the raster pattern. First grid 114 at a distance R₂ away from position reference system 104 is spatially bound in the vertical direction by a first horizontal line 118 and a last horizontal line 124. A plurality of horizontal lines spatially and temporally generated between first horizontal line 118 and last horizontal line 124 results from the timing of transmission of transmission signal 106 by position reference system 104 as electromagnetic radiation transmitter 109 moves within the raster pattern.

The distance R₂ can be any distance between first grid 114 and position reference system 104. For convenience, the distance is determined between a point 126 on first grid 114 and position reference system 104 as shown.

The vertical and horizontal lines may be formed in any suitable manner by position reference system 104. In the exemplary embodiment, the vertical and horizontal lines are formed as a result of a raster pattern traveled electronically or mechanically by electromagnetic radiation transmitter 109 and the timing of the transmission of transmission signal 106 as electromagnetic radiation transmitter 109 travels along the raster pattern. In other embodiments, the vertical and horizontal lines result from other transmission schemes. For example, all of the lines may be formed sequentially or all at once. One of the vertical lines or the horizontal lines may be formed before the other. Position reference system 104 may alternate between forming vertical and horizontal lines through transmission of transmission signal 106. Position reference system 104 may use a scanning laser to form the vertical and the horizontal lines, the laser sequentially forming all of one of the vertical and horizontal lines, followed by the sequential forming of the other of the vertical and horizontal lines. The rate at which the lines are sequentially formed may be so fast that for practical purposes, it is as if all of the lines were simultaneously formed.

Second grid 116 at distance R₃ away from position reference system 104 is the same as the first grid 114 in terms of the number of horizontal and vertical lines and the number of transmission signals 106, but at further distance from position reference system 104 than first grid 114. Second grid 116 is spatially bound in the horizontal direction by a first vertical line 130 of second grid 116 and a last vertical line 132 of second grid 116. A plurality of vertical lines spatially and temporally generated in between first vertical line 130 of second grid 116 and last vertical line 132 of second grid 116 results from the timing of transmission of transmission signal 106 by position reference system 104 as electromagnetic radiation transmitter 109 moves within the raster pattern. Second grid 116 at a distance R₃ away from position reference system 104 is spatially bound in the vertical direction by a first horizontal line 128 of second grid 116 and a last horizontal line 134 of second grid 116.

A plurality of horizontal lines spatially and temporally between first horizontal line 128 of second grid 116 and last horizontal line 134 of second grid 116 results from the timing of transmission of transmission signal 106 by position reference system 104 as electromagnetic radiation transmitter 109 moves within the raster pattern. The distance R₃ can be any distance between second grid 116 and position reference system 104, distance R₃ greater than distance R₂. For convenience, the distance R₃ is determined between a point 136 on second grid 116 and position reference system 104 as shown.

The similarity of first grid 114 and second grid 116 becomes apparent in the case of projected grid lines, where second grid 116 is formed by the same lines forming first grid 114, except second grid 116 is observed at a further distance from position reference system 104, making second grid 116 appear larger than first grid 114. Second grid 116 is the appearance of the grid lines generated by position reference system 104 at distance R₃ and first grid 114 is the appearance of the grid lines at distance R₂. The spacing between each horizontal line and the spacing between each vertical line increases as the distance from position reference system 104 increases. Point 126 and point 136 are at corresponding locations within first grid 114 and second grid 116, respectively. The spatial portion of the location information encoded on transmission signal 106 passing through points 126 and 136 is the same. The transmission signal is also encoded with temporal location information such as a time stamp at transmission of the transmission signal 106.

The time stamp allows for a determination of the distance from position reference system 104 when transmission signal 106 is received by electromagnetic radiation receiver 115 of vehicle 102. The difference in the time transmission signal 106 is transmitted and received is used to calculate the distance between vehicle 102 and position reference system 104. This allows for a determination of a position vehicle 102 in the Y-direction. The time difference also allows for a determination of the spacing between each horizontal line and the spacing between each vertical line at the distance from position reference system 104 where vehicle 102 receives transmission signal 106. The spatial location information encoded on transmission signal 106, along with the known distance between each horizontal line and the spacing between each vertical line, allows for a determination of a position of vehicle 102 within the Z-X plane. These determinations are made by a control system (shown in FIG. 5) of vehicle 102.

First grid 114 and second grid 116 may include any number of vertical lines and any number of horizontal lines. The number of vertical lines and the number of horizontal lines is a function of the speed at which electromagnetic radiation transmitter 109 traverses the raster pattern and the frequency with which transmission signal 106 is transmitted. As illustrated, they each include ten vertical lines and ten horizontal lines. A greater number of intersecting lines may result in improved detection and angular resolution for a fixed field of transmission 108 and distance from position reference system 104 in comparison to a fewer number of intersecting lines. First grid 114 and second grid 116 are depicted as having a square shape, but in alternative embodiments first grid 114 and second grid 116 have other shapes. For example, and without limitation, first grid 114 and second grid 116 are rectangular, oval, trapezoidal, or circular. The intersecting lines of first grid 114 and second grid 116 are orthogonal, but in alternative embodiments the intersecting lines of first grid 114 and second grid 116 intersect at other angles. For example, and without limitation the angles between the intersecting lines may be right angles, acute angles, or obtuse angles in different parts of the grid.

Vehicle guidance system 100 and position reference system 104 use a Cartesian coordinate system. In alternative embodiments, other coordinate systems are used by vehicle guidance system 100 and position reference system 104. For example, and without limitation, vehicle guidance system 100 and position reference system 104 use a polar coordinate system, cylindrical coordinate system, or spherical coordinate system. Position reference system 104 transmits transmission signal 106 using an altered raster pattern or other transmission pattern when vehicle guidance system 100 and position reference system 104 use a coordinate system other than a Cartesian coordinate system. For example, and without limitation, to form first grid 114 and second grid 116 in a polar coordinate system, position reference system 104 projects transmission signal 106 in field of transmission 108 using a transmission pattern which generates a series of concentric circles and lines radiating out from the center of the circles. Transmission signal 106 is projected along a series of points along the concentric circles and lines radiating out from the center of the circles.

First grid 114 and second grid 116 of intersecting projected lines are generated by raster scanning each of the lines or by projecting and scanning an elongated radiation beam. Position reference system 104, using electromagnetic radiation transmitter 109, raster scans horizontally to generate a first horizontal line.

The grid generator then steps to the next horizontal line location and raster scans a subsequent horizontal line. This process is repeated for subsequent horizontal lines until all the horizontal lines are generated. The vertical lines are scanned in a similar manner with a first vertical line generated followed by stepping and repeating the process for a next vertical line and all other subsequent vertical lines until all the vertical lines are generated. In an alternative embodiment, position reference system 104 raster scans in only one direction (e.g., horizontally or vertically) and controls the timing of transmission signal 106 such that transmission signal 106 passes through the points at which the horizontal and vertical lines intersect in first grid 114 and second grid 116. In further alternative embodiments, position reference system 104 uses other techniques to transmit transmission signal 106 encoded with location information to form a coordinate system.

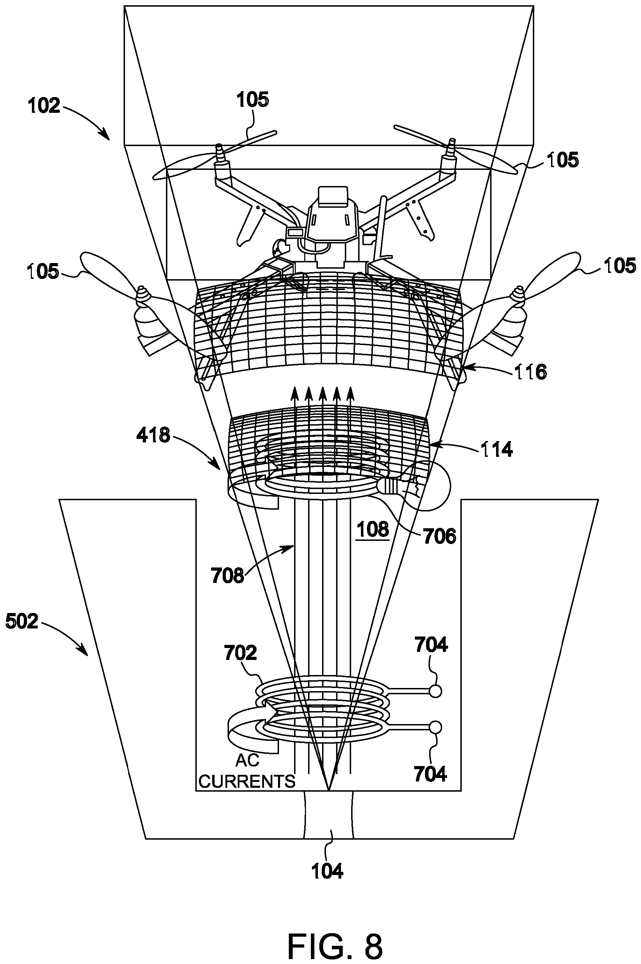

In the exemplary embodiment, field of transmission 108 is limited. Field of transmission 108 is bounded by upper bound 110 and lower bound 112. Upper bound 110 and lower bound 112 are fixed based on physical limitations of electromagnetic transmitter 109. Position reference system 104 and/or electromagnetic radiation transmitter 109 are positioned such that an object of interest (not shown), flight path, or other navigational interest falls within or near field of transmission 108. An object of interest further includes, for example, and without limitation, a vehicle re-energization location 107, wireless re-energization device (shown in FIG. 8), or a line of sight transceiver (shown in FIG. 5).

In alternative embodiments, field of transmission 108 is not limited or is substantially not limited. Position reference system 104 and/or electromagnetic transmitter 109 transmit transmission signal 106 in all directions radiating from position reference system 104. For example, and without limitation, electromagnetic transmitter 109 is mounted in a spherical mounting system, includes a plurality of electromagnetic transmitters 109, or is otherwise configured to transmit transmission signal 106 in all directions. In some embodiments, field of transmission is substantially not limited but has at least some bounds resulting from a mounting system coupling electromagnetic transmitter 109 to position reference system 104.

In the exemplary embodiment, electromagnetic radiation transmitter 109 transmits a coherent beam of electromagnetic radiation. Electromagnetic transmitter is, for example, and without limitation, a laser, maser, or other source of electromagnetic radiation. In alternative embodiments, electromagnetic transmitter 109 transmits electromagnetic radiation having a different beam pattern. For example, and without limitation, electromagnetic radiation transmitter 109 transmits an incoherent beam of electromagnetic radiation. In the exemplary embodiment, electromagnetic radiation transmitter 109 transmits electromagnetic radiation at a wavelength falling outside of the visible light spectrum. For example, and without limitation, electromagnetic radiation transmitter 109 transmits electromagnetic radiation falling within the infrared or ultraviolet spectrums. In alternative embodiments, electromagnetic radiation transmitter 109 transmits electromagnetic radiation within the visible light spectrum.

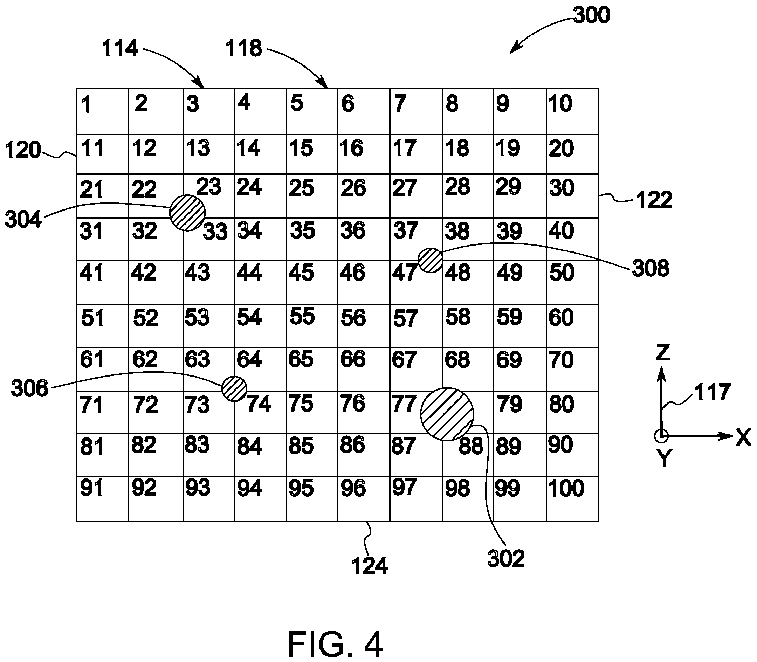

Electromagnetic radiation receiver 115 is configured to receive transmission signal 106. Electromagnetic radiation receiver 115 is any sensor or combination of sensors configured to measure electromagnetic radiation. For example, and without limitation, electromagnetic radiation receiver 115 is one or more active-pixel sensors, bolometers, charge-coupled devices (CCD) sensors, photodiodes, complementary metal-oxide-semiconductor (CMOS) sensors, or other photodetectors. In some embodiments, electromagnetic radiation receiver 115 is an array of a plurality of sensors (shown in FIG. 4). Electromagnetic radiation receiver 115 is coupled to the control system of vehicle 102.

Vehicle 102 uses the control system to process transmission signals 106 to determine the location of vehicle 102 based on the location information included in transmission signals 106. For example, and without limitation, the control system determines a distance between vehicle 102 and position reference system 104 based on the transmission time included in transmission signals 106 and a time when transmissions signals 106 are received. The control system determines the location of vehicle 102 in the Z-X plane based on the location information encoded on transmission signal 106. For example, and without limitation, the location information includes the point in the raster pattern at which transmission signal 106 is transmitted, an angle of transmission relative to position reference system 104, and/or other information. The control system determines the location of vehicle 102 in the Z-X plane based on the point in the raster pattern at which transmission signal 106 is transmitted.

Based on the location in the Z-X plane and the distance in the Y-direction from position reference system 104, the control system determines the location of vehicle 102 relative to position reference system 104 and vehicle travel path 101. In some embodiments, transmission signal 106 includes information about the location of position reference system 104 and vehicle travel path 101. For example, and without limitation, transmission signal 106 includes global position reference system information corresponding to the location of position reference system 104, map coordinates, altitude, and/or other information. Based on the absolute location of position reference system 104 and the relative location of vehicle 102 to position reference system 104 and vehicle travel path 101, the control system determines the absolute location of vehicle 102. In alternative embodiments, the control system does not determine the absolute location of vehicle 102 and only determines the location of vehicle 102 relative to position reference system 104 and vehicle travel path 101.

In some alternative embodiments, the control system does not determine the location of vehicle 102. Rather, the control system identifies the time at which transmission signals 106 are received and transmits this information to a remote system such as re-energization location 107 using a communications system (shown in FIG. 5). The remote system, e.g., re-energization location 107, determines the location of vehicle 102 and transmits the location of vehicle 102 to the communications system of vehicle 102. Vehicle 102 uses the location of vehicle 102 received from the remote system in controlling, for example, and without limitation, at least one control device 105 to maintain or change a position or location of vehicle 102, and to stay on course along vehicle travel path 101, for example.

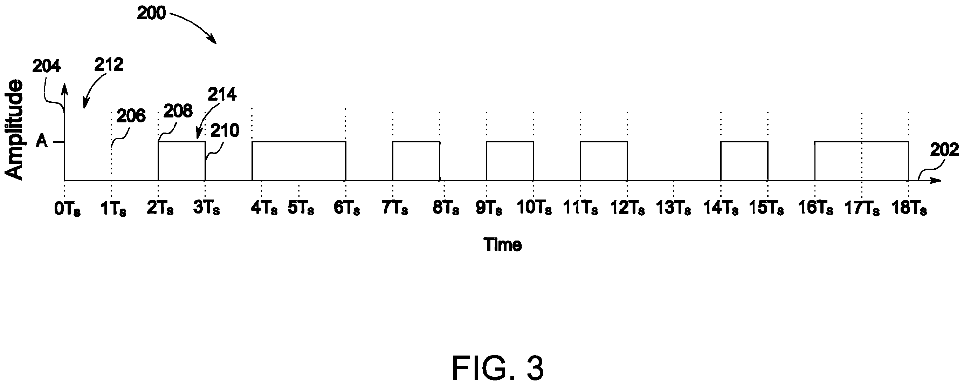

FIG. 3 is a graphical view 200 of transmission signal 106 (shown in FIG. 1) encoded with location information and transmitted by position reference system 104 (shown in FIG. 1). In the exemplary embodiment, transmission signal 106 is encoded with location information using an amplitude modulation scheme. Graph 200 includes an X-axis 202 defining a time in seconds. Graph 200 includes a Y-axis 204 defining a normalized amplitude. Each time period of Tₛ corresponds to a bit of information. For example, the time between the origin and point 206 corresponds to one bit. Transmission signal 106 with an amplitude of zero corresponds to a logical "0" bit. For example, bit 212 between point 206 and point 208 is a logical "0" bit. Transmission signal 106 with an amplitude of "A" corresponds to a logical "1" bit. For example, bit 214 between point 208 and point 210 is a logical "1" bit. Some bits are data bits for encoding location information corresponding to first grid 114 and second grid 116 the grid (both shown in FIG. 1). Some bits are start or stop indicators, error checking bits, time stamp bits, or header bits.

Electromagnetic radiation receiver 115 (shown in FIG. 1) detects the amplitude of the transmission signal 106 over time and passes this information to a control system (shown in FIG. 5). The control system uses the encoded information as described herein to control vehicle 102 (shown in FIG. 1). Upon detection of these bits by electromagnetic radiation receiver 115 and processing by the control system, the location within the grid can be determined. In some embodiments, transmission signals 106 are also used to communicate between position reference system 104 and vehicle 102 using messages including information other than just information on locations within first grid 114 and second grid 116.

In alternative embodiments, transmission signal 106 is encoded using other modulation schemes. For example, and without limitation, transmission signal 106 is encoded using frequency modulation, sideband modulation, phase modulation, phase-shift keying, frequency-shift keying, amplitude-shift keying, or quadrature amplitude modulation. In still further embodiments, two or more modulation schemes are used to encode transmission signal 106 with location information.

FIG. 4 is a schematic view 300 of transmission signals 106 (shown in FIG. 1) transmitted and projected into space by position reference system 104 (shown in FIG. 1). View 300 shows first grid 114 projected in the Z-X plane of coordinate system 117. First grid 114 is bound by first vertical line 120 and last vertical line 122. First grid 114 is also bound by first horizontal line 118 and last horizontal line 124. Electromagnetic radiation receiver 115 (shown in FIG. 1) receives transmission signals 106 forming first grid 114. Electromagnetic radiation receiver 115 includes a plurality of receiver components including first receiver component 302, second receiver component 304, third receiver component 306, and fourth receiver component 308. In alternative embodiments, electromagnetic radiation receiver 115 includes a different number of receiver components. Each of the vertical and horizontal lines formed by transmission signals 106 are encoded such that each of the regions within the grid, 1 through 100, can be identified. The four receiver components 302, 304, 306, 308 are in a non-coplanar configuration resulting from the orientation of vehicle 102 (shown in FIG. 1). Each circle in FIG. 4 is illustrated with a different size because the non-coplanar spacing of the detectors will yield a different area in intersection with first grid 114.

Each receiver component 302, 304, 306, 308 produces an output signal when it receives transmission signal 106 in first grid 114. When a receiver component 302, 304, 306, 308 crosses an intersection of a vertical line and a horizontal line, the receiver component 302, 304, 306, 308 receives transmission signal 106 encoded with location information specific to that intersection. The output signals of each receiver component 302, 304, 306, 308, resulting from reception of transmission signals 106, are demodulated and processed, using the control system of vehicle 102, to determine the location of each receiver component 302, 304, 306, 308 within first grid 114 and the distance of each receiver component 302, 304, 306, 308 from position reference system 104.

FIG. 5 is a block diagram illustrating vehicle 102 and position reference system 104. Position reference system 104 includes power source 402 and electromagnetic radiation transmitter 109. Power source provides power to electromagnetic radiation transmitter 109 which electromagnetic radiation transmitter 109 uses to transmit transmission signal 106 (shown in FIG. 1). Power source 402 is, for example, and without limitation, one or more of a battery, solar cell, connection to a power grid, generator, or other source of electrical energy. In some embodiments, position reference system 104 includes further components. For example, and without limitation, position reference system 104 includes a control system, a communications system, or other components. In some embodiments, position reference system 104 is always on and transmits transmission signal 106 continuously. In alternative embodiments, position reference system 104 transmits transmission signal 106 on a scheduled basis.

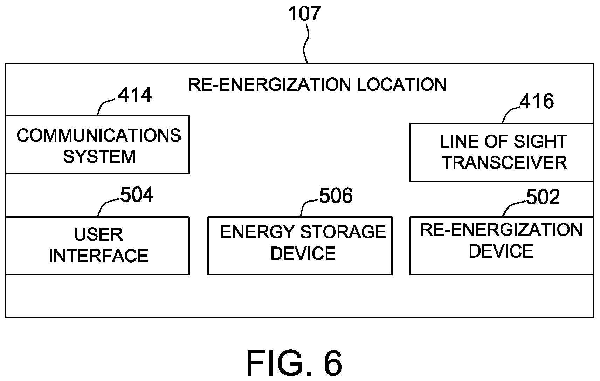

For example, and without limitation, position reference system 104 transmits transmission signal 106 during daylight hours, during a fixed work schedule, or other scheduled time periods. In still further embodiments, position reference system 104 receives a communication from re-energization location 107, vehicle 102, vehicle trajectory management system 103, and/or any other system which controls transmission of transmission signal 106 by position reference system 104. For example, and without limitation, position reference system 104 is in a listen or standby mode and when position reference system 104 receives a communication from vehicle 102 or vehicle re-energization location 107, position reference system 104 begins transmitting transmission signal 106. Position reference system 104 facilitates at least one of: positioning vehicle 102 for line of sight communication of data to vehicle re-energization location 107 (show in FIG. 6), positioning vehicle 102 for wireless re-energization, and positioning vehicle 102 for other re-energization.

Vehicle 102 includes electromagnetic radiation receiver 115. Electromagnetic radiation receiver 115 receives transmission signals 106 from electromagnetic radiation transmitter 109 of position reference system 104. Electromagnetic radiation receiver 115 is coupled to control system 404. Electromagnetic radiation receiver 115 outputs a signal to control system 404 which reflects received transmission signal 106. For example, and without limitation, electromagnetic radiation receiver 115 outputs a voltage corresponding to the logical bits encoded on transmissions signal 106. Control system 404 processes the signal from electromagnetic radiation receiver 115 as described herein to determine the location of vehicle 102.

Control system 404 is a real-time controller that includes any suitable processor-based or microprocessor-based system, such as a computer system, that includes microcontrollers, reduced instruction set circuits (RISC), application-specific integrated circuits (ASICs), logic circuits, and/or any other circuit or processor that is capable of executing the functions described herein. In one embodiment, control system 404 may be a microprocessor that includes read-only memory (ROM) and/or random access memory (RAM), such as, for example, a 32 bit microcomputer with 2 Mbit ROM and 64 Kbit RAM. In the exemplary embodiment, control system 404 also includes a memory device (not shown) that stores executable instructions for performing the functions described herein. For example, in the exemplary embodiment, the memory device stores instructions executed by a signal processor 406 subsystem and flight control system 408 subsystem of control system 404.

Signal processor 406 subsystem and flight control system 408 subsystem may be software subsystems, hardware subsystems, or a combination of hardware and software. Control system 404, signal processor 406, and/or flight control system 408 may include one or more processing units (not shown), such as, without limitation, an integrated circuit (IC), an application specific integrated circuit (ASIC), a microcomputer, a programmable logic controller (PLC), and/or any other programmable circuit. The processor(s) may include multiple processing units (e.g., in a multi-core configuration). The processor(s) execute instructions to which perform the functions described herein. The above examples are exemplary only, and thus are not intended to limit in any way the definition and/or meaning of the term "processor."

Signal processor 406 is configured to process the signal(s) received from electromagnetic radiation receiver(s) 115 at control system 404. Signal processor 406 is configured to process transmission signal 106. Signal processor 406 demodulates transmission signal 106 and retrieves location information from transmission signal 106. Based on the location information, signal processor 406 determines the location of vehicle 102 relative to position reference system 104 as described herein. For example, and without limitation, signal processor 406 determines the location of vehicle 102 in Z-X plane relative to position reference system 104 (shown in FIG. 1) based on a spatial portion of the location information encoded on transmission signal 106. The spatial portion of the location information identifies wherein in first grid 114 and second grid 116 transmission signal 106 is located. This information identifies where in the Z-X plane vehicle 102 is located. Signal processor 406 determines the location of vehicle 102 in the Y-direction relative to position reference system 104 (shown in FIG. 1) and vehicle trajectory management system 103 based on temporal location encoded on transmission signal 106.

Transmission signal 106 includes a time stamp corresponding to when transmission signal 106 is transmitted. Using the time stamp and the time at which transmission signal 106 is received, signal processor 406 determines the distance between position reference system 104 and vehicle 102. In embodiments where first grid 114 and second grid 116 are diverging, e.g., the distance between vertical and/or horizontal lines are spaced further apart in second grid 116 than in first grid 114, signal processor 406 uses the spatial portion and temporal location of transmission signal 106 in combination to determine the location of vehicle in the Z-X plane (shown in FIG. 1).

In embodiments where electromagnetic radiation receiver 115 includes multiple components 302, 304, 306, 308 (shown in FIG. 4), signal processor 406 uses location information received by each component 302, 304, 306, 308 to determine the location of vehicle 102. For example, and without limitation, signal processor 406 uses a known geometric relationship between each component 302, 304, 306, 308 and the location information provided by each component 302, 304, 306, 308 to determine the location of vehicle 102 in the Z-X plane (shown in FIG. 1) and in the Y-direction relative to position reference system 104 (shown in FIG. 1) and vehicle travel path 101.

In some embodiments, signal processor 406 receives position information from position reference system 410. Position information is information regarding the position of vehicle 102 at a specific location. For example, and without limitation, position information includes a roll angle, a yaw angle, a pitch angle, an airspeed, an altitude, and/or other position information. Control system 404 uses position information to control at least one control device 105 to control the flight of vehicle 102. In some embodiments, control system 404 is configured to control vehicle 102 along vehicle travel path 101 without using satellite-based navigation system data. Position reference system 410 includes at least one of a gyroscope, accelerometer, inclinometer, and/or other sensors. In some embodiments, position reference system 410 includes a satellite-based navigation system receiver, e.g., a global position reference system receiver, a radio frequency navigation system, and/or other navigation system. In some embodiments, signal processor 406 combines location information with position information using, for example, and without limitation, a Kalman filter. Control system 404 uses the combined information to determine a location of vehicle 102.

Flight control system 408 is configured to process at least information from signal processor 406 and to control at least one control device 105 based on the received information. Flight control system 408 controls at least one control device 105 to maintain and/or stabilize vehicle 102 at a current location as determined by signal processor 406. Flight control system 408, for example, and without limitation, uses a control feedback loop to maintain vehicle 102 at a location based on the location of vehicle 102 determined by signal processor 406.

Flight control system 408 is further configured to change a location of vehicle 102. Flight control system 408 controls at least one control device 105 to change a location of vehicle 102. For example, and without limitation, flight control system 408 controls at least one control device 105 to execute a maneuver such as forward flight, transitioning to or from a hover, a roll, a yaw, a climb, a dive, a slip turn, a banked turn, a standard rate turn, or other maneuver. Flight control system 408 may change the location of vehicle 102 from one location to another based on instructions stored locally on vehicle 102. For example, and without limitation, flight control system 408 controls at least one control device 105 to change the location of vehicle 102 from a first location to another location using location information from position reference system 410, e.g., and without limitation, location information from a global position reference system. This allows flight control system 408 to move vehicle 102 between locations such as waypoints 111, destination locations 119, and/or other defined locations. In some embodiments, flight control system 408 travels from one location to another using position reference system 410 and when vehicle 102 receives transmission signal 106 from position reference system 104, flight control system 408 controls vehicle 102 to maintain the location of vehicle 102 based on transmission signal 106.

Flight control system 408 may also control at least one control device 105 based on information or instructions received at control system 404 from communications system 414. For example, communications system 414 receives instructions from vehicle re-energization location 107 which when executed by flight control system 408 cause flight control system 408 to control at least one control device 105 to change the location of vehicle 102 and/or execute a maneuver. Communications system 414 may also receive instructions from vehicle re-energization location 107 corresponding to manual control of one or more control devices 105. This allows an operator to manually control vehicle 102 in real time using vehicle re-energization location 107. In some embodiments, flight control system 408 assumes a default state in the absence of instructions received by communications system 414. For example, and without limitation, the default state is to continue flight towards a waypoint 111 or destination location 119, maintain a location using transmission signals 106 received from position reference system 104, maintain a location using information received from position reference system 410, and/or otherwise resume a default state.

Communications system 414 is a wireless communication transceiver configured to communicate using a wireless communication standard such as Bluetooth^{™} or Z-Wave^{™}, through a wireless local area network (WLAN) implemented pursuant to an IEEE (Institute of Electrical and Electronics Engineers) 802.11 standard (i.e., WiFi), and/or through a mobile phone (i.e., cellular) network (e.g., Global System for Mobile communications (GSM), 3G, 4G) or other mobile data network (e.g., Worldwide Interoperability for Microwave Access (WIMAX)), or a wired connection (i.e., one or more conductors for transmitting electrical signals).

Vehicle 102 further includes line of sight transceiver 416. Line of sight transceiver 416 is configured to communicate with an additional line of sight transceiver 416 (shown in FIG. 6) using a line of sight communication technique. For example, and without limitation, line of sight transceiver 416 is configured to transmit and receive a coherent beam of laser light, microwaves, infrared light, and/or other electromagnetic energy. Line of sight transceiver 416 is or includes, for example, and without limitation, a laser, maser, infrared emitter, active-pixel sensor, bolometers, charge-coupled devices (CCD) sensors, photodiodes, or complementary metal-oxide-semiconductor (CMOS) sensors.

In this embodiment, vehicle 102 further includes re-energization device 418. Re-energization device 418 is configured to receive electromagnetic energy wirelessly and use the received electromagnetic energy to re-energize an energy storage device 420. For example, and without limitation, re-energization device 418 is configured to receive electromagnetic energy wirelessly by at least one of inductive coupling, resonant inductive coupling, capacitive coupling, magnetodynamic coupling, microwaves, or light transmission to transmit electromagnetic energy. Re-energization device 418 includes one or more antenna devices configured to receiver electromagnetic energy. For example, and without limitation, re-energization device 418 includes wire coils, tuned wire coils, lumped element resonators, electrodes, rotating magnets, parabolic dishes, phased array antennas, lasers, photocells, lenses, and/or other devices for receiving electromagnetic radiation. Energy storage device 420 includes a first amount of energy for propelling vehicle 102 along vehicle travel path 101. In this embodiment, energy storage device 420 is configured to store electrical energy using at least one of a battery, capacitor, fuel cell, and/or other device for storing electrical energy. In alternative embodiments, vehicle 102 is powered by liquid and/or solid fuel. In further alternative embodiments, vehicle 102 energy storage device 420 is a fuel tank or storage device and includes a refueling port (e.g., a probe configured to receive fuel from a drogue or other fuel source).

In this embodiment, the control device 105 controls vehicle 102 to at least one vehicle re-energization location 107 configured to add a second amount of energy to the energy storage device 420. More specifically, control device 105 determines a vehicle re-energization location 107 from a plurality of vehicle re-energization locations 107 based at least on the location information in transmission signal 106 received by the electromagnetic radiation receiver 115 and directs vehicle 102 to the re-energization location. In some embodiments, control device 105 determines a vehicle re-energization location 107 based on an operational availability of the vehicle re-energization location 107. The operational availability of the vehicle re-energization location 107 may be determined by a plurality of factors including a number of vehicles 102 being re-energized at the vehicle re-energization location 107, an amount of energy stored at vehicle re-energization location 107, and/or a priority of vehicles 102 currently being re-energized or inbound to the vehicle re-energization location 107.

In this embodiment, position reference system 104 is used to position vehicle 102 relative to a refueling device and/or fuel source (e.g., in a station keeping mode) for refueling/re-energizing by vehicle re-energization location 107.

FIG. 6 is a block diagram illustrating vehicle re-energization location 107 for use with vehicle 102 and position reference system 104 (both shown in FIGS. 1 and 4). Re-energization location 107 includes communications system 414. Communication system 414 is configured to communicate with communications system 414 of vehicle 102. As described herein, vehicle re-energization location 107 sends instructions for controlling vehicle 102 to vehicle 102 using communications system 414 to facilitate directing vehicle to re-energizing location 107 along vehicle travel path 101. Commands from an operator are received by vehicle re-energization location 107 through a user interface 504. These commands are then sent to vehicle 102 as instructions using communications system 414. In some embodiments, communications system 414 is further configured for wireless and/or wired communication with other devices such as a personal computer, workstation, network, mobile computing device, and/or other device.

User interface 504 is configured to receive operator inputs and provide outputs to an operator. For example, and without limitation, user interface includes input devices including a keyboard, mouse, touchscreen, joystick(s), throttle(s), buttons, switches, and/or other input devices. For example, and without limitation, user interface includes output devices including a display (e.g., a liquid crystal display (LCD), or an organic light emitting diode (OLED) display), speakers, indicator lights, flight instruments, and/or other output devices.

Re-energization location 107 further includes a re-energization device 502 (e.g., a wireless power transceiver) configured to add a second amount of energy to energy storage device 420. For example, and without limitation, re-energization device 502 uses one or more of inductive coupling, resonant inductive coupling, capacitive coupling, magnetodynamic coupling, microwaves, or light transmission to transmit electromagnetic energy. Re-energization device 502 includes one or more antenna devices configured to transmit electromagnetic energy. For example, and without limitation, re-energization device 502 includes wire coils, tuned wire coils, lumped element resonators, electrodes, rotating magnets, parabolic dishes, phased array antennas, lasers, photocells, lenses, and/or other devices for transmitting electromagnetic radiation. Re-energization device 502 draws power from energy storage device 506. Energy storage device 506 includes one or more of a battery, fuel cell, connection to a power grid, generator, solar panel, and/or other source of electrical energy. In some alternative embodiments, re-energization device 502 and a separate energy storage device 506 dedicated to wireless power transceiver are separate from vehicle re-energization location 107. In alternative embodiments, re-energization device 502 is a refueling device configured to refuel vehicle 102 with liquid or solid fuel through a refueling port of vehicle 102. In yet further alternative embodiments, re-energization device 502 is configured to re-energize vehicle 102 using a second amount of energy in the form of at least one of mechanical energy, electrical energy, magnetic energy, gravitational energy, chemical energy, nuclear energy, and thermal energy.

Re-energization location 107 further includes line of sight transceiver 416. For example, and without limitation, line of sight transceiver 416 is configured to transmit and receive a coherent beam of laser light, microwaves, infrared light, and/or other electromagnetic energy. Line of sight transceiver 416 is or includes, for example, and without limitation, a laser, maser, infrared emitter, active-pixel sensor, bolometers, charge-coupled devices (CCD) sensors, photodiodes, or complementary metal-oxide-semiconductor (CMOS) sensors. In alternative embodiments, line of sight transceiver 416 is separate from re-energization location and is included in a data hub with communication connections to additional remote computing devices. The high band width available through line of sight transceiver 416 allows for vehicle 102 to transmit large amounts of data to vehicle re-energization location 107 and/or other computer devices for processing off board of vehicle 102. This minimizes the computing requirements and weight of vehicle 102 increasing range and flight time. High bandwidth provided by line of sight transceiver 416 allows for real time off board processing of data transmitted by vehicle 102.

In some embodiments, vehicle re-energization location 107 is partially or entirely handheld. In other embodiments, vehicle re-energization location 107 is otherwise mobile, e.g., included in a vehicle. Further, in some embodiments, vehicle re-energization location 107 is fixed. Re-energization location 107 may further include a control system, processor, and/or memory (not shown) which executes one or more instructions, programs, or functions to provide the functions of vehicle re-energization location 107 described herein.

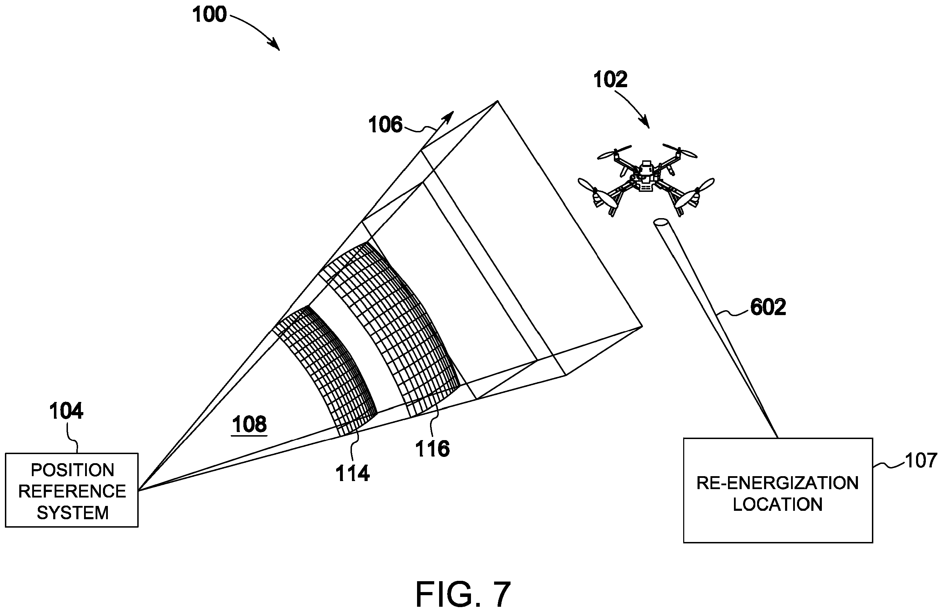

FIG. 7 is a schematic view of position reference system 104 and vehicle 102 with vehicle 102 positioned for line of sight communication with vehicle re-energization location 107. Vehicle 102 is held in a stationary location relative to position reference system 104 using the techniques described herein. Vehicle 102 holds its location using location information from position reference system 104 transmitted in transmission signal 106 in field of transmission 108 which forms first grid 114 and second grid 116. Re-energization location 107 and vehicle 102 communicate using a line of sight transmission 602 transmitted between vehicle 102 and vehicle re-energization location 107. As vehicle 102 is stationary at a fixed location relative to position reference system 104, vehicle re-energization location 107 does not require active control of line of sight transceiver 416 (shown in FIG. 6) of vehicle re-energization location 107 to transmit a coherent beam to line of sight transceiver 416 of vehicle 102. For example, and without limitation, vehicle re-energization location 107 does not include a pointing and tracking system. Rather, an operator of vehicle re-energization location 107 aims vehicle re-energization location 107 at stationary vehicle 102 to establish line of sight communication between vehicle 102 and vehicle re-energization location 107. In alternative embodiments, vehicle re-energization location 107 receives a location of vehicle 102 from communications system 414 of vehicle 102 (shown in FIG. 5) and transmits line of sight transmission 602 to vehicle 102 with line of sight transmission 602 aimed based on the known location of vehicle 102 and a known location of vehicle re-energization location 107.

FIG. 8 is a schematic view of vehicle 102 positioned for wireless charging by re-energization device 502. Vehicle 102 is positioned at a stationary location relative to position reference system 104 and/or re-energization device 502 using the techniques described herein. Vehicle 102 holds its location using location information from position reference system 104 transmitted in transmission signal 106 in field of transmission 108 which forms first grid 114 and second grid 116. Vehicle 102 controls one or more control devices 105 based on the received location information from position reference system 104 to maintain the stationary location. In some embodiments, position reference system 104 is attached to or included in re-energization device 502. In alternative embodiments, position reference system 104 is remote from re-energization device 502. In some embodiments, re-energization device 502 is included in re-energization location 107 (shown in FIG. 6). In alternative embodiments, re-energization device 502 is separate from re-energization location 107. Vehicle 102 is positioned in the air at a stationary location relative to re-energization device 502. In alternative embodiments, vehicle 102 uses location information from position reference system 104 to land on a platform (not shown) which positions vehicle 102 for wireless charging. In further alternative embodiments, vehicle 102 is positioned as described herein for refueling by a refueling device.

Re-energization device 502 includes first inductive coils 702 coupled to energy storage device 420 (shown in FIG. 5) through terminals 704. Alternating current flows through first inductive coils 702 which produces magnetic field 708. Magnetic field 708 encompasses re-energization device 418 of vehicle 102 due to the location of vehicle 102. Re-energization device 418 includes second inductive coils 706. Magnetic field 708 passing across second inductive coils 706 generates a current in second inductive coils 706 which charges vehicle 102. In alternative embodiments, re-energization device 502 uses other wireless charging techniques and components to wirelessly charge vehicle 102. For example, and without limitation, re-energization device 502 uses one or more of inductive coupling, resonant inductive coupling, capacitive coupling, magnetodynamic coupling, microwaves, or light transmission to transmit electromagnetic energy. Re-energization device 502 includes one or more antenna devices configured to transmit electromagnetic energy. For example, and without limitation, re-energization device 502 includes wire coils, tuned wire coils, lumped element resonators, electrodes, rotating magnets, parabolic dishes, phased array antennas, lasers, photocells, lenses, and/or other devices for transmitting electromagnetic radiation In alternative embodiments, recharging or refueling device 502 includes a refueling component, for example, and without limitation, a drogue, boom, hose, or other component configured to refuel vehicle 102 through a refueling port included in vehicle 102.

As vehicle 102 is stationary at a fixed location relative to re-energization device 502, vehicle re-energization location 107 does not require active control of re-energization device 502 to transmit wireless energy to line of re-energization device 418 of vehicle 102. For example, and without limitation, vehicle re-energization location 107 does not include a pointing and tracking system.

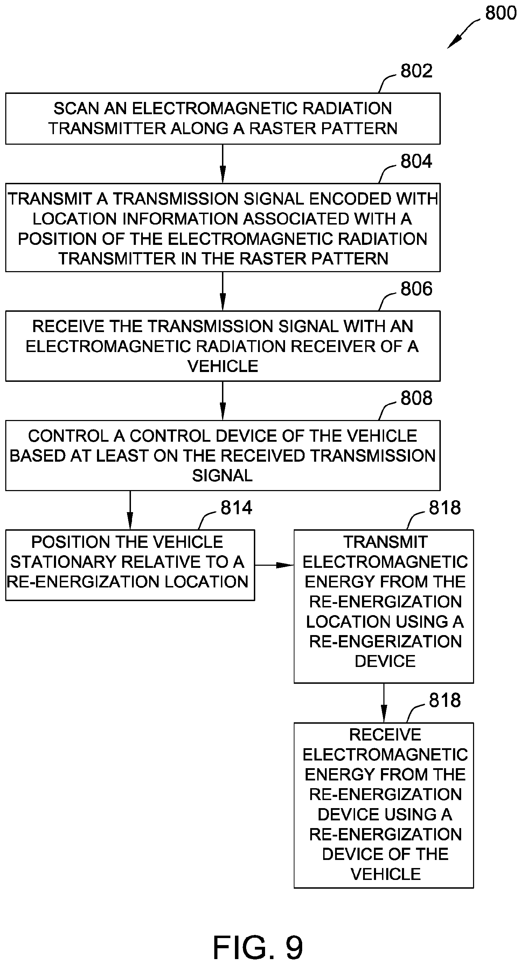

FIG. 9 is a flow chart of an exemplary process 800 of positioning vehicle 102 (shown in FIG. 1). Position reference system 104 (shown in FIG. 1) scans 802 electromagnetic radiation transmitter 109 (shown in FIG. 1) along a raster pattern. For example, and without limitation, the raster pattern corresponds to first grid 114 and second grid 116 (both shown in FIG. 1). Position reference system 104 transmits 804 transmission signal 106 (shown in FIG. 1) encoded with location information associated with a position of electromagnetic radiation transmitter 109 in the raster pattern when transmission signal 106 is transmitted. For example, and without limitation, transmission signal 106 is encoded using amplitude modulation as shown in FIG. 3. Electromagnetic radiation receiver 115 (shown in FIG. 1) of vehicle 102 receives 806 transmission signal 106. Control system 404 (shown in FIG. 5) of vehicle 102 controls 808 at least one control device 105 (shown in FIG. 1) based at least on the received transmission signal 106. For example, and without limitation, control system 404 processes the received transmission signal 106 using signal processor 406 (shown in FIG. 5) and controls control device 105 using flight control system 408 (shown in FIG. 5).

Signal processor 406 determines the location of vehicle 102 using the location information encoded in transmission signal 106. The location is relative to position reference system 104 or absolute if the location of position reference system 104 is known. In some embodiments, signal processor 406 uses position information, e.g., pitch angle, roll angle, yaw angle, altitude, and/or other position information, from position reference system 410 (shown in FIG. 5) in determining the position and/or location of vehicle 102 along vehicle travel path 101. For example, and without limitation, signal processor 406 combines location information and position information using a Kalman filter.

In the example embodiment, control system 404 positions 814 vehicle 102 at a location stationary to vehicle re-energization location 107. For example, vehicle 102 is positioned at a location stationary relative to position reference system 104 which allows vehicle re-energization location 107 to be located or moved to a stationary or substantially stationary, e.g., while hand-held, location relative to vehicle 102. In alternative embodiments, vehicle re-energization location 107 is in communication with vehicle 102 and/or vehicle re-energization location 107 and provides information corresponding to the location of vehicle re-energization location 107. Using this information and location information from position reference system 104, control system 404 positions vehicle 102 at a specific stationary location relative to vehicle re-energization location 107.

When in the stationary location, vehicle re-energization location 107 transmits 818 electromagnetic energy from re-energization device 502 (shown in FIG. 6). For example, and without limitation, re-energization device 502 uses one or more of inductive coupling, resonant inductive coupling, capacitive coupling, magnetodynamic coupling, microwaves, or light transmission to transmit electromagnetic energy. Vehicle 102 receives 820 the transmitted electromagnetic energy using re-energization device 418 (shown in FIG. 5). Holding vehicle 102 at a stationary location using control system 404 and position reference system 104 facilitates reception of electromagnetic energy by reducing uncoupling of re-energization device 502 and re-energization device 418 due to movement of vehicle 102. Holding vehicle 102 at a stationary location using control system 404 and position reference system 104 further facilitates reception of electromagnetic energy by enabling wireless charging techniques using coherent beams such as charging by reception of laser light or microwaves.

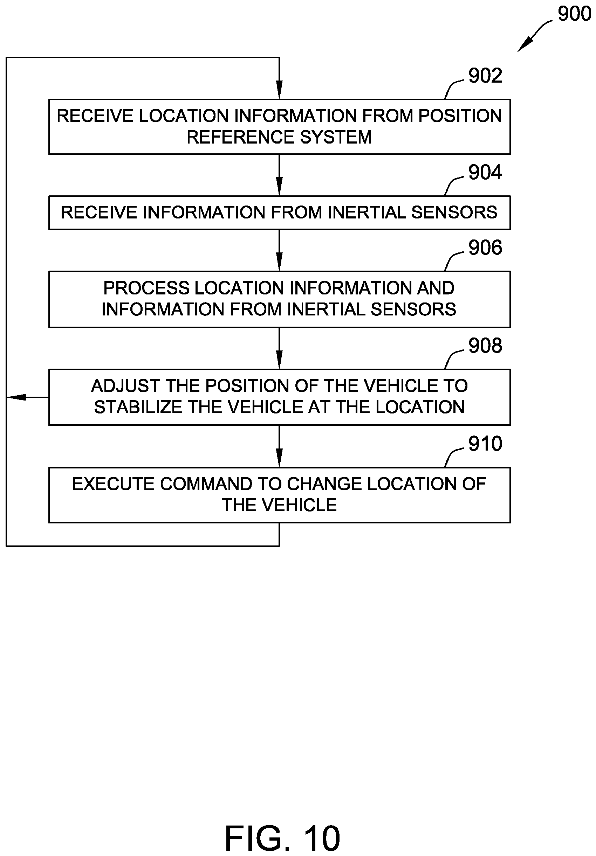

FIG. 10 is a flow chart of an exemplary process 900 of changing the location of vehicle 102 (shown in FIG. 1). Control system 404 (shown in FIG. 5) of vehicle 102 receives 902 location information from position reference system 104 (shown in FIG. 1) using electromagnetic radiation receiver 115 (shown in FIG. 1). For example, and without limitation, location information includes information about the location of vehicle 102 relative to position reference system 104. In some embodiments, vehicle 102 further receives additional location information from position reference system 410 (shown in FIG. 5) of vehicle 102. For example, and without limitation, the additional location information is or includes coordinated from a global position reference system. Control system 404 (shown in FIG. 5) receives 904 position information from inertial sensors. For example, and without limitation, control system 404 receives position information, e.g., a roll angle, a yaw angle, a pitch angle, an airspeed, an altitude, and/or other position information, from sensors of position reference system 410 such as a gyroscope, accelerometer, inclinometer, and/or other sensors.

Vehicle 102 processes 906 the location information and position information. For example, and without limitation, vehicle 102 processes the location information and position information using signal processor 406 (shown in FIG. 5) and a Kalman filter or other function. In alternative embodiments, the location information and position information is processed remotely from vehicle 102 and results are transmitted to vehicle 102. For example, and without limitation, vehicle 102 transmits location information and position information to vehicle re-energization location 107 (shown in FIG. 6) using communications system 414 (shown in FIG. 5). Re-energization location 107 processes the location information and position information and transmits the result to communications system 414 of vehicle 102.

Based on the processed location information and position information, control system 404 adjusts 908 the position and/or location of vehicle 102 to stabilize vehicle 102 at a specific location. For example, and without limitation, control system 404 holds vehicle 102 at its current location using flight control system 408 (shown in FIG. 5) and control of at least one control device 105 (shown in FIG. 5). Vehicle 102 iteratively receives location information, receives position information, processes the location and position information, and adjusts the position of vehicle 102 to stabilize of maintain vehicle 102 at the location, for instance, in a queue of vehicles 102 waiting to re-energize at a re-energization location 107.

Control system 404 of vehicle 102 executes 910 a command to change the location of vehicle 102. For example, and without limitation, vehicle 102 receives a command to change location from vehicle re-energization location 107 using communications system 414. The command to change location is executed by control system 404 and at least one control device 105 is controlled to change the location of vehicle 102. The command to change location may be a command to travel to a specific waypoint 111 or destination location 119, a command to actuate a specific control device 105 in a specific way, or another command to otherwise change the location of vehicle 102. Once the location of vehicle 102 has been changed by executing a command to change location, vehicle 102 receives location information from position reference system 104 and any vehicle travel path 101 updates received from vehicle trajectory management system 103 at the new location. For example, and without limitation, vehicle 102 maintains position at a first location based on location data from position reference system 104, executes a command to change location and travels to a second location. At the second location, vehicle 102 receives location information from the same or a different position reference system 104. Using the location information from position reference system 104, vehicle 102 maintains its location and/or position.

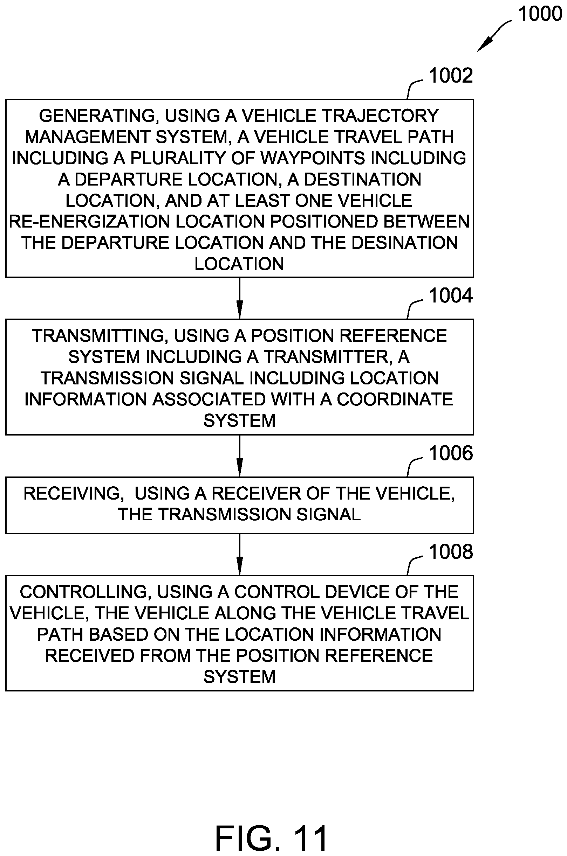

FIG. 11 is a flow chart illustrating a method 1000 for guiding a vehicle 102. Referring to Figs. 1-10, method 1000 includes generating 1002, using a vehicle trajectory management system 103, a vehicle travel path 101 including a plurality of waypoints 111 including a departure location 113, a destination location 119, and at least one vehicle re-energization location 107 positioned between the departure location and the destination location. Method 1000 also includes transmitting 1004, using a position reference system 104 including a transmitter 109, a transmission signal including location information associated with a coordinate system. Method 1000 further includes receiving 1006, using a receiver 115 of vehicle 102, the transmission signal. Finally, method 1000 includes controlling 1008, using a control device 105 of vehicle 102, vehicle 102 along vehicle travel path 101 based on the location information received from position reference system 104.

The above-described methods and systems provide for enhanced vehicle travel path planning, vehicle travel scheduling, vehicle positioning, vehicle guidance, and vehicle re-energization along a vehicle travel path for a plurality of vehicles. Furthermore, the systems and methods described herein allow for enhanced in-transit real-time vehicle travel path updates including being directed to vehicle re-energization locations based on changing energization states of the vehicles and re-energization priorities of the vehicles in transit along similar vehicle travel paths. Additionally, the system and methods described herein facilitate rapid and efficient re-energization of the vehicle by maintaining the vehicle at a stationary location and directing the vehicle to a specific re-energization location more precisely and efficiently. By accurately establishing a position of a vehicle relative to a fixed or moving position reference system and scheduling a re-energization location(s) in real-time in response to current energization status and the vehicle travel path of the vehicle, the vehicle is capable of enhanced operational capability, availability, and more efficient operation.

An exemplary technical effect of the methods, systems, and apparatus described herein includes at least one of: (a) generating a plurality of multi-dimensional vehicle travel paths using a vehicle trajectory management system and a position reference system; (b) guiding a plurality of vehicles along the plurality of vehicle travel paths; (c) scheduling a plurality of vehicles at a plurality of vehicle re-energization locations; (d) guiding and maintaining a plurality of vehicles in a stationary position at the plurality of vehicle re-energization locations; (e) re-energizing the plurality of vehicles at the plurality of vehicle re-energization locations along the plurality of generated vehicle travel paths.

Exemplary embodiments of method and systems for guiding a vehicle along a travel path including at least one re-energization location are described above in detail. The method and systems described herein are not limited to the specific embodiments described herein, but rather, components of systems or steps of the methods may be utilized independently and separately from other components or steps described herein. For example, the methods may also be used in combination with multiple vehicles and/or position reference systems, and are not limited to practice with only the vehicle types and position reference systems as described herein. Additionally, the methods may also be used with other components of devices, and are not limited to practice with only the components as described herein. Rather, the exemplary embodiments may be implemented and utilized in connection with many other vehicles and position reference systems.

Although specific features of various embodiments may be shown in some drawings and not in others, this is for convenience only. In accordance with the principles of the systems and methods described herein, any feature of a drawing may be referenced or claimed in combination with any feature of any other drawing.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A vehicle guidance system (100) comprising:
a vehicle trajectory management system (103) configured to generate a vehicle travel path (101) including a plurality of waypoints (111) including a departure location (113), a destination location (119), and at least one vehicle re-energization location (107) positioned between the departure location (113) and the destination location (119);
a position reference system (104) comprising a transmitter (109) configured to emit a transmission signal (106) including location information associated with a coordinate system (117); and
a vehicle (102) comprising:
a receiver (115) configured to receive the transmission signal (106);
an energy storage device (420, 506) configured to store energy for propelling said vehicle (102) along the vehicle travel path (101), wherein the at least one vehicle re-energization location (107) is configured to add an amount of energy to the energy storage device (420, 506); and
a control device (105) comprising a control system (404) in communication with said position reference system (104) and said vehicle trajectory management system (103), said control device (105) configured to control said vehicle (102) along the vehicle travel path (101) based on the location information received from the position reference system (104); and **characterized in that**:
the transmission signal (106) also includes temporal location information indicating a time of transmission of the transmission signal (106) for determining a distance of the vehicle (102) from the position reference system (104) when the transmission signal (106) is received by the receiver (115),
wherein said position reference system (104) is configured to scan a beam encoded with the location information and emitted by the transmitter (109) in a grid (114, 116) pattern,
wherein the location information corresponds to a current location of the beam within the grid (114, 116) pattern, and
wherein the temporal location information allows for a determination of a spacing between each horizontal line of the grid (114, 116) pattern and a spacing between each vertical line of the grid (114, 116) pattern at the distance from the position reference system (104) where the vehicle (102) receives the transmission signal (106).

2. The guidance system (100) in accordance with Claim 1, wherein said control device (105) is configured to control said vehicle (102) along the vehicle travel path (101) without using satellite-based navigation system data.

3. The guidance system (100) in accordance with Claim 1 or 2, wherein the vehicle trajectory management system (103) is configured to determine and reserve the at least one vehicle re-energization location (107) based on at least one of:
a length of the vehicle travel path (101);
an operational availability of the at least one vehicle re-energization location (107);
weather conditions along the vehicle travel path (101);
an amount of energy stored by said energy storage device (420, 506); and
a priority of said vehicle (102) relative to at least one additional vehicle (102).

4. The guidance system (100) in accordance with any of Claims 1 to 3, wherein said energy storage device (420, 506) is configured to store at least one of mechanical energy, electrical energy, magnetic energy, gravitational energy, chemical energy, nuclear energy, and thermal energy.

5. The guidance system (100) in accordance with any of Claims 1 to 4, wherein said vehicle (102) is an unmanned vehicle (102), and wherein said unmanned vehicle (102) is at least one of an aerially-based unmanned vehicle (102), a land-based unmanned vehicle (102), and a water-based unmanned vehicle (102).

6. The guidance system (100) in accordance with any of Claims 1 to 5, wherein said vehicle (102) is configured to be autonomously operated.

7. The guidance system (100) in accordance with any of Claims 1 to 6, wherein said vehicle (102) further comprises a wireless charging receiver (502) configured to receive electromagnetic energy from a wireless charging transmitter (418) of the at least one vehicle re-energization location (107).

8. The guidance system (100) in accordance with Claim 7, wherein said wireless charging receiver (502) is configured to receive energy by at least one of magnetic induction, a beam of microwave energy, and a beam of laser light energy.

9. The guidance system (100) of any preceding claim, wherein:
the transmitter (109) is a scanning electromagnetic radiation transmitter (109) configured to modulate the transmission signal (106) to encode the location information;
the receiver (115) is an electromagnetic radiation receiver (115); and
at least one of said vehicle trajectory management system (103) and said control system (404) determines the at least one vehicle re-energization location (107) based at least on the location information received by said electromagnetic radiation receiver (115).

10. The guidance system (100) in accordance with Claim 9, wherein said scanning electromagnetic radiation transmitter (109) comprises a laser transmitter (109).

11. The guidance system (100) in accordance with Claim 9 or 10, wherein said position reference system (104) is configured to scan a beam emitted by the scanning electromagnetic radiation transmitter (109) in a raster pattern and the location information encoded on the beam corresponds to a current location of the beam within the raster pattern.

## Patentansprüche

1. Fahrzeugführungssystem (100), das Folgendes umfasst:
ein Fahrzeugbewegungsbahnverwaltungssystem (103), das konfiguriert ist, um einen Fahrzeugfahrweg (101) zu erzeugen, der mehrere Wegpunkte (111) beinhaltet, die einen Abfahrtsort (113), einen Zielort (119) und wenigstens einen Fahrzeugaufladeort beinhalten (107), der zwischen dem Abfahrtsort (113) und dem Zielort (119) positioniert ist;
ein Positionsreferenzsystem (104), das einen Sender (109) umfasst, der konfiguriert ist, um ein Sendesignal (106) zu emittieren, das Ortsinformationen beinhaltet, die einem Koordinatensystem (117) zugeordnet sind; und
ein Fahrzeug (102), das Folgendes umfasst:
einen Empfänger (115), der konfiguriert ist, um das Sendesignal (106) zu empfangen;
eine Energiespeichervorrichtung (420, 506), die konfiguriert ist, um Energie zum Antreiben des Fahrzeugs (102) entlang des Fahrzeugfahrwegs (101) zu speichern, wobei der wenigstens eine Fahrzeugaufladeort (107) konfiguriert ist, um eine Energiemenge zu der Energiespeichervorrichtung (420, 506) hinzuzufügen; und
eine Steuervorrichtung (105), die ein Steuersystem (404) umfasst, das in Kommunikation mit dem Positionsreferenzsystem (104) und dem Fahrzeugbewegungsbahnverwaltungssystem (103) steht, wobei die Steuervorrichtung (105) konfiguriert ist, um das Fahrzeug (102) entlang des Fahrzeugfahrwegs (101) basierend auf den Ortsinformationen zu steuern, die von dem Positionsreferenzsystem (104) empfangen werden; und
**dadurch gekennzeichnet, dass**:
das Sendesignal (106) ebenso zeitliche Ortsinformationen beinhaltet, die einen Zeitpunkt des Sendens des Sendesignals (106) zum Bestimmen einer Distanz des Fahrzeugs (102) von dem Positionsreferenzsystem (104) angeben, wenn das Sendesignal (106) durch den Empfänger (115) empfangen wird,
wobei das Positionsreferenzsystem (104) konfiguriert ist, um einen Strahl abzutasten, der mit den Ortsinformationen codiert ist und durch den Sender (109) in einem Gitter(114, 116)muster emittiert wird,
wobei die Ortsinformationen einem aktuellen Ort des Strahls innerhalb des Gitter (114, 116)musters entsprechen, und
wobei die zeitlichen Ortsinformationen eine Bestimmung eines Abstands zwischen jeder horizontalen Linie des Gitter(114, 116)musters und eines Abstands zwischen jeder vertikalen Linie des Gitter(114, 116)musters in der Distanz von dem Positionsreferenzsystem (104) ermöglicht, wo das Fahrzeug (102) das Sendesignal (106) empfängt.

2. Führungssystem (100) nach Anspruch 1, wobei die Steuervorrichtung (105) konfiguriert ist, um das Fahrzeug (102) entlang des Fahrzeugfahrwegs (101) zu steuern, ohne satellitenbasierte Navigationssystemdaten zu verwenden.

3. Führungssystem (100) nach Anspruch 1 oder 2, wobei das Fahrzeugbewegungsbahnverwaltungssystem (103) konfiguriert ist, um den wenigstens einen Fahrzeugaufladeort (107) basierend auf Folgendem zu bestimmen und zu reservieren:
einer Länge des Fahrzeugfahrwegs (101);
einer Betriebsverfügbarkeit des wenigstens einen Fahrzeugaufladeorts (107);
Wetterbedingungen entlang des Fahrzeugfahrwegs (101);
einer Energiemenge, die durch die Energiespeichervorrichtung (420, 506) gespeichert ist; und/oder
einer Priorität des Fahrzeugs (102) relativ zu wenigstens einem zusätzlichen Fahrzeug (102).

4. Führungssystem (100) nach einem der Ansprüche 1 bis 3, wobei die Energiespeichervorrichtung (420, 506) konfiguriert ist, um mechanische Energie, elektrische Energie, magnetische Energie, Gravitationsenergie, chemische Energie, Kernenergie und/oder thermische Energie zu speichern.

5. Führungssystem (100) nach einem der Ansprüche 1 bis 4, wobei das Fahrzeug (102) ein unbemanntes Fahrzeug (102) ist und wobei das unbemannte Fahrzeug (102) ein auf luftbasiertes unbemanntes Fahrzeug (102), ein landbasiertes unbemanntes Fahrzeug (102) und/oder ein wasserbasiertes unbemanntes Fahrzeug (102) ist.

6. Führungssystem (100) nach einem der Ansprüche 1 bis 5, wobei das Fahrzeug (102) konfiguriert ist, um autonom betrieben zu werden.

7. Führungssystem (100) nach einem der Ansprüche 1 bis 6, wobei das Fahrzeug (102) ferner einen drahtlosen Ladeempfänger (502) umfasst, der konfiguriert ist, um elektromagnetische Energie von einem drahtlosen Ladesender (418) des wenigstens einen Fahrzeugaufladesorts (107) zu empfangen.

8. Führungssystem (100) nach Anspruch 7, wobei der drahtlose Ladeempfänger (502) konfiguriert ist, um Energie durch eine magnetische Induktion, einen Mikrowellenenergiestrahl und/oder einen Laserlichtenergiestrahl zu empfangen.

9. Führungssystem (100) nach einem der vorhergehenden Ansprüche, wobei:
der Sender (109) ein Abtastsender (109) für elektromagnetische Strahlung ist, der konfiguriert ist, um das Sendesignal (106) zu modulieren, um die Ortsinformationen zu codieren;
der Empfänger (115) ein Empfänger (115) für elektromagnetische Strahlung ist; und
das Fahrzeugbewegungsbahnverwaltungssystem (103) und/oder das Steuersystem (404) den wenigstens einen Fahrzeugaufladeort (107) wenigstens basierend auf den Standortinformationen bestimmt, die durch den Empfänger (115) für elektromagnetische Strahlung empfangen werden.

10. Führungssystem (100) nach Anspruch 9, wobei der Abtastsender (109) für elektromagnetische Strahlung einen Lasersender (109) umfasst.

11. Führungssystem (100) nach Anspruch 9 oder 10, wobei das Positionsreferenzsystem (104) konfiguriert ist, um einen Strahl, der durch den Abtastsender (109) für elektromagnetische Strahlung emittiert wird, in einem Rastermuster abzutasten, und die Ortsinformationen, die auf dem Strahl codiert sind, einem aktuellen Ort des Strahls innerhalb des Rastermusters entsprechen.

## Revendications

1. Système de guidage de véhicule (100) comprenant :
un système de gestion de trajectoire de véhicule (103) configuré pour générer un trajet de déplacement de véhicule (101) comportant une pluralité de points de cheminement (111) comportant un emplacement de départ (113), un emplacement de destination (119) et au moins un emplacement de remise sous tension de véhicule (107) positionné entre l'emplacement de départ (113) et l'emplacement de destination (119) ;
un système de référence de position (104) comprenant un émetteur (109) configuré pour transmettre un signal de transmission (106) comportant des informations d'emplacement associées à un système de coordonnées (117) ; et
un véhicule (102) comprenant :
un récepteur (115) configuré pour recevoir le signal de transmission (106) ;
un dispositif de stockage d'énergie (420, 506) configuré pour stocker de l'énergie pour propulser ledit véhicule (102) le long du trajet de déplacement de véhicule (101), l'au moins un emplacement de remise sous tension de véhicule (107) étant configuré pour ajouter une quantité d'énergie au dispositif de stockage d'énergie (420, 506) ; et
un dispositif de commande (105) comprenant un système de commande (404) en communication avec ledit système de référence de position (104) et ledit système de gestion de trajectoire de véhicule (103), ledit dispositif de commande (105) étant configuré pour commander ledit véhicule (102) le long du trajet de déplacement de véhicule (101) en fonction des informations d'emplacement reçues à partir du système de référence de position (104) ; et
**caractérisé en ce que** :
le signal de transmission (106) comporte également des informations d'emplacement temporel indiquant un temps de transmission du signal de transmission (106) pour déterminer une distance du véhicule (102) par rapport au système de référence de position (104) lorsque le signal de transmission (106) est reçu par le récepteur (115),
ledit système de référence de position (104) étant configuré pour balayer un faisceau codé avec les informations d'emplacement et transmis par le transmetteur (109) dans un motif de grille (114, 116),
les informations d'emplacement correspondant à un emplacement actuel du faisceau à l'intérieur du motif de grille (114, 116), et
les informations d'emplacement temporel permettant une détermination d'un espacement entre chaque ligne horizontale du motif de grille (114, 116) et d'un espacement entre chaque ligne verticale du motif de grille (114, 116) au niveau de la distance du système de référence de position (104) où le véhicule (102) reçoit le signal de transmission (106).

2. Système de guidage (100) selon la revendication 1, ledit dispositif de commande (105) étant configuré pour commander ledit véhicule (102) le long du trajet de déplacement de véhicule (101) sans utiliser des données du système de navigation par satellite.

3. Système de guidage (100) selon la revendication 1 ou 2, le système de gestion de trajectoire de véhicule (103) étant configuré pour déterminer et réserver l'au moins un emplacement de remise sous tension du véhicule (107) en fonction :
d'une longueur du trajet de déplacement de véhicule (101) ; et/ou
d'une disponibilité opérationnelle de l'au moins un emplacement de remise sous tension de véhicule (107) ; et/ou
des conditions météorologiques le long du trajet de déplacement de véhicule (101) ; et/ou
d'une quantité d'énergie stockée par ledit dispositif de stockage d'énergie (420, 506) ; et/ou
d'une priorité dudit véhicule (102) par rapport à au moins un véhicule supplémentaire (102).

4. Système de guidage (100) selon l'une quelconque des revendications 1 à 3, ledit dispositif de stockage d'énergie (420, 506) étant configuré pour stocker une énergie mécanique et/ou une énergie électrique et/ou énergie magnétique et/ou une énergie gravitationnelle et/ou une énergie chimique et/ou une énergie nucléaire et/ou une énergie thermique.

5. Système de guidage (100) selon l'une quelconque des revendications 1 à 4, ledit véhicule (102) étant un véhicule sans pilote (102), et ledit véhicule sans pilote (102) étant un véhicule sans pilote à base aérienne (102) et/ou un véhicule sans pilote basé à terre (102) et/ou un véhicule sans pilote basé sur l'eau (102).

6. Système de guidage (100) selon l'une quelconque des revendications 1 à 5, ledit véhicule (102) étant configuré pour être actionné de manière autonome.

7. Système de guidage (100) selon l'une quelconque des revendications 1 à 6, ledit véhicule (102) comprenant en outre un récepteur de charge sans fil (502) configuré pour recevoir de l'énergie électromagnétique à partir d'un transmetteur de charge sans fil (418) de l'au moins un emplacement de remise sous tension de véhicule (107).

8. Système de guidage (100) selon la revendication 7, ledit récepteur de charge sans fil (502) étant configuré pour recevoir de l'énergie par une induction magnétique et/ou un faisceau d'énergie micro-ondes et/ou un faisceau d'énergie lumineuse laser.

9. Système de guidage (100) selon une quelconque revendication précédente,
le transmetteur (109) étant un transmetteur de rayonnement électromagnétique à balayage (109) configuré pour moduler le signal de transmission (106) afin de coder les informations d'emplacement ;
le récepteur (115) étant un récepteur de rayonnement électromagnétique (115) ; et
ledit système de gestion de trajectoire de véhicule (103) et/ou ledit système de commande (404) déterminant l'au moins un emplacement de remise sous tension de véhicule (107) en fonction au moins des informations d'emplacement reçues par ledit récepteur de rayonnement électromagnétique (115).

10. Système de guidage (100) selon la revendication 9, ledit transmetteur de rayonnement électromagnétique à balayage (109) comprenant un transmetteur laser (109).

11. Système de guidage (100) selon la revendication 9 ou 10, ledit système de référence de position (104) étant configuré pour balayer un faisceau émis par le transmetteur de rayonnement électromagnétique à balayage (109) dans une trame de balayage et les informations d'emplacement codées sur le faisceau correspondant à un emplacement actuel du faisceau dans la trame de balayage.
